# EUROPÄISCHE PATENTSCHRIFT

(11) **EP 3 642 892 B1**
(45) Veröffentlichungstag und Bekanntmachung des Hinweises auf die Patenterteilung: **27.04.2022**
(21) Anmeldenummer: 18735521.9
(22) Anmeldetag: 20.06.2018
(51) Int. Cl.: H01M 50/581, H01M 50/213, H01M 10/42, B25F 5/02

(54) **AKKUPACKSCHNITTSTELLENVORRICHTUNG**
RECHARGEABLE BATTERY PACK INTERFACE APPARATUS
DISPOSITIF INTERFACE DE BLOC-BATTERIE

(30) Priorität: 22.06.2017 DE 102017210557
(43) Veröffentlichungstag der Anmeldung: 29.04.2020
(73) Patentinhaber: Robert Bosch GmbH, 70442 Stuttgart (DE)
(72) Erfinder: ZAHN, Wolf, 70439 Stuttgart (DE); KNEER, Florian, 73105 Duernau (DE); BAUMGARTNER, Josef, 72218 Wildberg (DE)
(86) Internationale Anmeldenummer: PCT/EP2018/066360
(87) Internationale Veröffentlichungsnummer: WO 2018/234355

(56) Entgegenhaltungen:
- EP-A1- 2 511 970
- EP-A1- 2 562 844
- DE-U1-202012 013 284

## Beschreibung

### Stand der Technik

Es sind bereits Handwerkzeugmaschinen und Akkupacks mit Akkupackschnittstellenvorrichtung gemäß Oberbegriff des Anspruchs 1 bekannt. Als relevante Dokumente des Stands der Technik seien an dieser Stelle die DE 20 2012 013284 U1, EP 2 562 844 A1, EP 2 511 970 A1 und EP 2 517 281 B1 genannt.

### Offenbarung der Erfindung

Die Erfindung betrifft eine Akkupackschnittstellenvorrichtung mit zumindest einer Verbindungseinheit, die zur lösbaren mechanischen Verbindung eines Akkupacks mit einem Verbraucher ausgebildet ist, wobei die mechanische Verbindung über eine Relativbewegung des Akkupacks zu dem Verbraucher lösbar ist. Es wird vorgeschlagen, dass die Akkupackschnittstellenvorrichtung eine Sicherungseinheit aufweist, die derart ausgebildet ist, dass in einem nicht ausgelösten Zustand der Sicherungseinheit die mechanische Verbindung über die Relativbewegung des Akkupacks zu dem Verbraucher lösbar ist und in einem ausgelösten Zustand der Sicherungseinheit die mechanische Verbindung über eine andere Relativbewegung lösbar ist, die sich von der Relativbewegung unterscheidet. Vorteilhaft kann durch die Sicherungseinheit im Falle einer hohen mechanischen Belastung eines mit dem Verbraucher verbunden Akkupacks, beispielsweise bei einem Sturz, eine Beschädigung durch das Lösen der Verbindung verhindert werden.

Die Akkupackschnittstellenvorrichtung kann als Teil eines Akkupacks oder als Teil eines Verbrauchers ausgebildet sein. Zusätzlich oder alternativ ist auch denkbar, dass die Akkupackschnittstellenvorrichtung als Teil eines Adapters ausgebildet ist, über den der Akkupack mit dem Verbraucher verbindbar ist. Der Adapter ist insbesondere zwischen dem Akkupack und dem Verbraucher angeordnet. Der Verbraucher kann insbesondere als ein tragbares Gerät ausgebildet sein. Vorzugsweise ist der Verbraucher als ein Gartengerät, wie beispielsweise ein Rasenmäher oder eine Heckenschere, als eine Handwerkzeugmaschine, wie beispielsweise ein Winkelschleifer, ein Schrauber, eine Bohrmaschine, ein Bohrhammer, etc. oder als ein Messwerkzeug, wie beispielsweise ein Laserentfernungsmessgerät, ausgebildet. Alternativ ist auch denkbar, dass der Verbraucher als Radio, als eine Lampe oder als eine Absaugung ausgebildet sein kann. Die Akkupackschnittstelle ist insbesondere für ein System aus einem Akkupack und einer Handwerkzeugmaschine vorgesehen, bei dem der Gewichtsanteil des Ackupacks zumindest 1/8 des Gesamtgewichts, vorzugsweise zumindest ¼ des Gesamtgewichts, bevorzugt zumindest 1/3 des Gesamtgewichts, ist. Bei derartigen Gewichtsverhältnissen kann es aufgrund des hohen Gewichts der Akkupacks und der Masseträgheit des Akkupacks zu einer sehr hohen Belastung der mechanischen Verbindung kommen im Falle eines Fallenlassens des System kommen, die zu einer nicht reversiblen Schädigung der mechanischen Verbindung führen kann.

Die Verbindungseinheit der Akkupackvorrichtung ist insbesondere dazu ausgebildet, eine kraft- und/oder formschlüssige Verbindung mit einer korrespondierenden mechanischen Schnittstelle herzustellen. Die Verbindungseinheit der Ackupackvorrichtung und die korrespondierende mechanische Schnittstelle sind jeweils an einem der miteinander lösbar zu verbindenden Geräte angeordnet. Es ist alternativ denkbar, dass die korrespondierende mechanische Schnittstelle ebenfalls als eine Verbindungseinheit einer weiteren Akkupackvorrichtung ausgebildet ist. Unter einer lösbaren Verbindung soll in diesem Zusammenhang insbesondere eine werkzeuglos und zerstörungsfrei lösbare Verbindung verstanden werden. Vorteilhaft umfasst die Verbindungseinheit der Akkupackschnittstellenvorrichtung oder die korrespondierende mechanische Schnittstelle zumindest ein Betätigungselement, über das die Verbindung des Akkupacks mit dem Verbraucher lösbar fixierbar ist.

Des Weiteren umfasst der Akkupack zumindest eine Akkuzelle und eine elektrische Schnittstelle, über die die zumindest eine Akkuzelle mit dem Verbraucher elektrisch verbindbar ist. Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Ackuzellen als NiCd- oder NiMh-, besonders bevorzugt als lithiumbasierte Akkuzellen, ausgebildet. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10,8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind. Die elektrische Schnittstelle umfasst insbesondere zumindest zwei elektrische Kontaktelemente, die zur Übertragung von Energie ausgebildet sind. Alternativ oder zusätzlich kann die elektrische Schnittstelle ein sekundäres Ladespulenelement zur induktiven Ladung aufweisen. Zusätzlich kann die elektrische Schnittstelle weitere Kontaktelemente aufweisen, die dazu ausgebildet sind, zusätzliche Informationen, die vorzugsweise über die Elektronik ermittelt werden, an den Verbraucher zu übertragen. Dabei kann es sich beispielsweise um einen Ladezustand des Akkupacks, um eine Temperatur innerhalb des Akkupacks, um eine Codierung oder um eine Restkapazität des Akkupacks handeln. Es ist denkbar, dass die Elektronik den Lade- und/oder Entladevorgang des Akkupacks regelt oder steuert. Die Elektronik kann beispielsweise zumindest eine Leiterplatte, eine Recheneinheit, einen Transistor, einen Kondensator und/oder einen Speicher aufweisen. Die Elektronik kann zudem ein oder mehrere Sensorelemente aufweisen, beispielsweise zur Ermittlung der Temperatur innerhalb des Akkupacks. Die Elektronik kann alternativ oder zusätzlich ein Codierungselement, wie beispielsweise ein Codierungswiderstand, aufweisen.

Die Relativbewegung erfolgt insbesondere von einem verbundenen Zustand zu einem gelösten Zustand. Im verbundenen Zustand ist der Akkupack insbesondere elektrisch mit dem Verbraucher verbunden. Im verbundenen Zustand ist der Akkupack vorzugsweise an der Handwerkzeugmaschine fixiert, wobei die Fixierung über das Betätigungselement lösbar ist. Das Betätigungselement kann beispielsweise als Knopf, Hebel oder als Taster ausgebildet sein. Im gelösten Zustand ist der Akkupack elektrisch nicht mit dem Verbraucher verbunden. Im gelösten Zustand ist der Akkupack insbesondere nicht im mechanischen Kontakt mit dem Verbraucher. Bevorzugt ist die Verbindungseinheit derart ausgebildet, dass die Relativbewegung zum Lösen des Akkupacks der entgegengesetzten Relativbewegung zum Verbinden des Akkupacks entspricht.

Die Sicherungseinheit ist insbesondere über eine Krafteinwirkung auf den Akkupack und/oder auf den Verbraucher auslösbar ausgebildet, wobei sich vorzugsweise die Krafteinwirkung auf den Akkupack von der Krafteinwirkung auf den Verbraucher unterscheidet. Die Wirkrichtung der Kraft zur Auslösung der Sicherungseinheit ist insbesondere unterschiedlich zu der Relativbewegung ausgebildet.

Des Weiteren wird vorgeschlagen, dass die Relativbewegung translatorisch und/oder rotarisch ausgebildet ist. Insbesondere weist die Relativbewegung bis zu drei translatorische und bis zu drei rotatorische Bewegungsfreiheiten auf, die unabhängig voneinander sind. Die Gesamtzahl der Bewegungsfreiheiten definiert den Freiheitsgrad der Relativbewegung. Eine Relativbewegung mit einer, zwei, oder drei translatorischen Bewegungsfreiheiten verläuft linear entlang einer Linie, auf einer Ebene oder in einem Raum. Eine Relativbewegung mit ein, zwei oder drei rotatorischen Bewegungsfreiheiten verläuft drehend um eine, um zwei oder um drei senkrecht zueinander stehenden Drehachsen. Der Freiheitsgrad der Relativbewegung ist vorzugsweise maximal fünf.

Weiterhin wird vorgeschlagen, dass die Relativbewegung eine einzelne Bewegungsfreiheit aufweist. Vorteilhaft kann dadurch die Verbindung über einen einfachen Bewegungsablauf gelöst werden. Insbesondere weist die Relativbewegung einen Freiheitsgrad von eins mit einer einzelnen rotatorischen Bewegungsfreiheit auf. Beispielhaft kann die Verbindung über eine Schwenkbewegung gelöst werden. Vorzugsweise weist die Relativbewegung einen Freiheitsgrad von eins mit einer einzelnen translatorischen Bewegungsfreiheit auf. Beispielhaft kann die Verbindung über ein Herausschieben gelöst werden.

Zudem wird vorgeschlagen, dass die andere Relativbewegung translatorisch und/oder rotatorisch ausgebildet ist. Insbesondere weist die andere Relativbewegung zum Lösen der Verbindung des Akkupacks mit dem Verbraucher im Vergleich zu der Relativbewegung einen unterschiedlichen Freiheitsgrad auf. Insbesondere ist der Freiheitsgrad der anderen Relativbewegung um eins erhöht. Vorzugsweise weist die andere Relativbewegung zumindest eine andere Bewegungsfreiheit auf, als die Relativbewegung. Weist die Relativbewegung eine translatorische Bewegungsfreiheit auf, so kann die andere Relativbewegung anstelle dieser oder zusätzlich eine rotatorische Bewegungsfreiheit oder eine sich unterscheidende translatorische Bewegungsfreiheit aufweisen und umgekehrt.

Des Weiteren wird vorgeschlagen, dass die Verbindungseinheit ein beweglich gelagertes Sicherungselement aufweist. Das Sicherungselement kann translatorisch und/oder rotatorisch gelagert ausgebildet sein. Das Sicherungselement ist im ausgelösten Zustand der Sicherungseinheit in einer unterschiedlichen Position angeordnet, als im nicht ausgelösten Zustand der Sicherungseinheit.

Weiterhin wird vorgeschlagen, dass das Sicherungselement schwenkbar um eine Schwenkachse gelagert ist, die sich insbesondere entlang der Relativbewegung erstreckt. Vorteilhaft kann dadurch eine sehr kompakte Akkupackvorrichtung realisiert werden. Vorzugsweise wird der Öffnungswinkel der Schwenkbewegung um die Schwenkachse über zumindest ein Anschlagelement, vorzugsweise über zwei Anschlagelemente, begrenzt. Der maximale Öffnungswinkel beträgt insbesondere im Wesentlichen 180°, vorzugsweise im Wesentlichen 90°.

Zudem wird vorgeschlagen, dass die Sicherungseinheit ein Rückstellelement aufweist, welches das Sicherungselement mit einer Kraft beaufschlagt. Insbesondere beaufschlagt das Rückstellelement das Sicherungselement derart mit einer Kraft, dass das Sicherungselement in einem nicht ausgelösten Zustand verbleibt. Alternativ oder zusätzlich ist auch denkbar, dass das Rückstellelement das Sicherungselement entgegen einer Bewegungsrichtung mit einer Kraft beaufschlagt, entlang der sich das Sicherungselement vom nicht ausgelösten in den ausgelösten Zustand bewegt. Vorzugsweise beaufschlagt das Rückstellelement das Sicherungselement direkt. Es ist allerdings auch denkbar, dass das Rückstellelement das Sicherungselement indirekt, beispielsweise über zumindest ein weiteres Bauteil, mit einer Kraft beaufschlagt. Eine Auslösung der Sicherungseinheit erfolgt insbesondere, falls eine Kraft auf das bewegliche Sicherungselement einen Grenzwert überschreitet. Der Grenzwert ist dabei im Wesentlichen durch die Kraft festgelegt, mit der das Rückstellelement auf das Sicherungselement wirkt.

Des Weiteren wird vorgeschlagen, dass das Sicherungselement als eine Führungsschiene ausgebildet ist. Vorteilhaft kann dadurch die Akkupackvorrichtung während der Relativbewegung durch das Sicherungselement geführt werden.

Weiterhin wird vorgeschlagen, dass das Rückstellelement als eine Rastkugel oder als eine Schenkelfeder ausgebildet ist. Vorteilhaft kann dadurch eine hohe Rückstellkraft auf das Sicherungselement realisiert werden. Alternativ kann das Rückstellelement auch als eine Blattfeder, als eine Torsionsfeder, als ein Torsionsstab, etc. ausgebildet sein.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Akkupacks mit einer erfindungsgemäßen Akkupackschnittstellenvorrichtung;
- Fig. 2: eine Explosionszeichnung der Akkupackschnittstellenvorrichtung gemäß Fig. 1;
- Fig. 3: einen Querschnitt durch den mit einer Handwerkzeugmaschine verbundenen Akkupack mit der Akkupackschnittstellenvorrichtung im unbetätigten Zustand;
- Fig. 4: einen Querschnitt durch den von der Handwerkzeugmaschine gelösten Akkupack mit der Akkupackschnittstellenvorrichtung im betätigten Zustand;
- Fig. 5: eine Explosionszeichnung einer alternativen Ausführungsform der Akkupackschnittstellenvorrichtung;
- Fig. 6: ein System aus einer Handwerkzeugmaschine, einem Adapter und einem Akkupack.

### Beschreibung der Ausführungsbeispiele

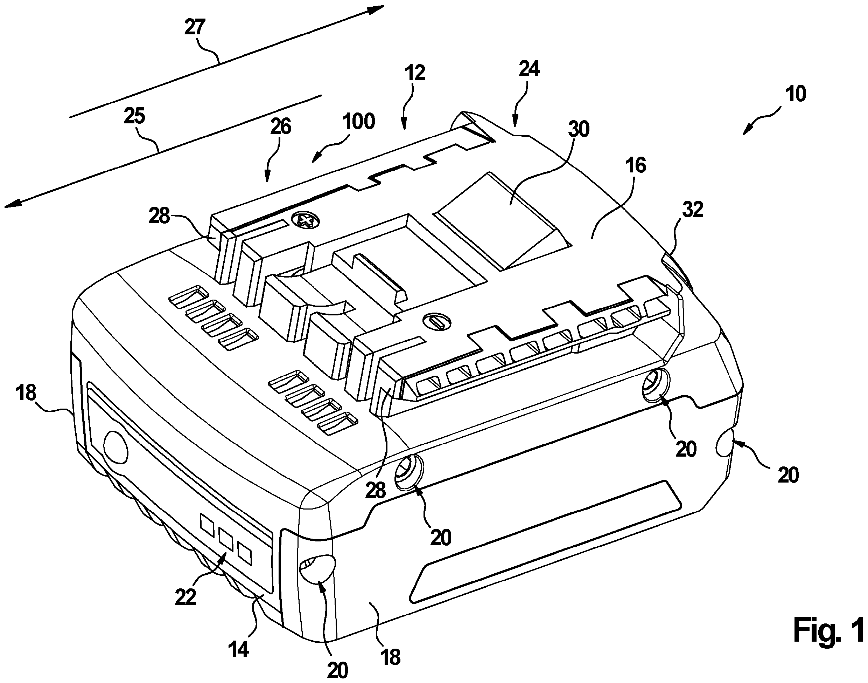

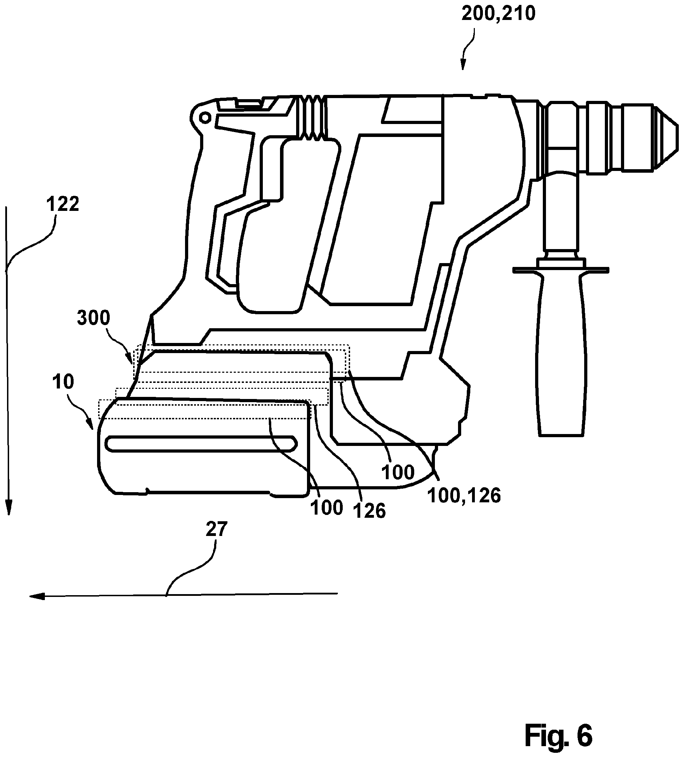

In Fig. 1 ist in einer perspektivischen Ansicht ein Akkupack 10 mit einer Akkupackschnittstellenvorrichtung 100 gezeigt. Der Akkupack 10 ist beispielhaft als ein Handwerkzeugmaschinenakkupack ausgebildet und derart elektrisch und mechanisch mit einem als Handwerkzeugmaschine 210 (siehe Fig. 6) ausgebildeten Verbraucher 200 verbindbar ausgebildet, dass die Handwerkzeugmaschine 210 über den Akkupack 10 mit Energie versorgt werden kann. Der Akkupack 10 weist ein Gehäuse 12 auf, das mehrteilig ausgebildet ist. Das Gehäuse 12 weist auf seiner Unterseite einen Grundkörper 14, auf seiner Oberseite ein Schnittstellengehäuseteil 16 und an seinen Seitenflächen zwei gegenüberliegende Seitenwände 18 auf. Die Gehäuseteile 14, 16, 18 sind über Schraubverbindungen 20 miteinander verbunden. Auf der Vorderseite des Akkupacks 10 ist eine Ladezustandsanzeige 22 angeordnet, über die der Ladezustand des Akkupacks 10 anzeigbar ist. Die Ladezustandsanzeige 22 ist im Gehäuse 12, insbesondere im Grundkörper 14, integriert. Das Gehäuse 12, insbesondere das Schnittstellengehäuseteil 16, umfasst die Akkupackschnittstellenvorrichtung 100 mit einer Verbindungseinheit 24 und einer elektrische Schnittstelle 26. Die Verbindungseinheit 24 und die elektrische Schnittstelle 26 sind zum lösbaren Anbringen und zur elektrischen Verbindung des Akkupacks 10 an der Handwerkzeugmaschine 210 oder an einem Adapter 300 (siehe Fig. 6) ausgebildet, die jeweils eine korrespondierende mechanische und elektrische Schnittstelle aufweisen.

Der Akkupack 10 ist beispielhaft als Schiebeakkupack ausgebildet. Beim Anbringen des Akkupacks 10 werden Aufnahmemittel, z. B. Führungsnuten und Führungsrippen, der Handwerkzeugmaschine 210 oder des Adapters 300 zur Aufnahme von korrespondierenden Sicherungselementen 28 der Verbindungseinheit 24 mit diesen in Eingriff gebracht, wobei der Akkupack 10 mittels einer Relativbewegung 25 des Akkupacks 10 zu der Handwerkzeugmaschine 210 oder zu dem Adapter 300 entlang der Aufnahmemittel eingeführt und die Sicherungselemente 28 des Akkupacks 10 in die korrespondierende mechanische Schnittstelle 126 der Handwerkzeugmaschine 210 oder die korrespondierende Schnittstelle 126 des Adapters 300 (siehe Fig. 6) eingeschoben wird. Die Relativbewegung 25 zum Verbinden des Akkupacks 10 und eine Relativbewegung 27 zum Lösen des Akkupacks 10 weisen jeweils einen Freiheitsgrad von eins auf. Insbesondere weisen die Relativbewegungen 25, 27 jeweils eine einzelne translatorische Bewegungsfreiheit auf, die identisch ausgebildet sind. Die Relativbewegung 25 zum Verbinden des Akkupacks 10 verläuft entgegengesetzt zu der Relativbewegung 27 zum Lösen des Akkupacks 10.

Zur Verriegelung des Akkupacks 10 mit der Handwerkzeugmaschine 210 oder mit dem Adapter 300 weist die Verbindungseinheit 24 ein Verriegelungselement 30 auf. Das Verriegelungselement 30 ist als federbelastetes Rastelement ausgebildet, das schwenkbar im Gehäuse 12 des Akkupacks 10 gelagert ist. Die Verriegelung erfolgt über ein Einschieben des Akkupacks 10 entlang der Relativbewegung 25, wobei das Verriegelungselement 30 am Ende der Relativbewegung in eine Hinterschnittstellung einrastet. Zum Lösen der Verriegelung weist die Verbindungseinheit 24 ein als ein Taster ausgebildetes Betätigungselement 32 auf, das mit dem Verriegelungselement 30 beweglich gekoppelt ist. Durch eine Betätigung des Betätigungselements 32 bewegt sich das Verriegelungselement 30 in das Gehäuse 12 des Akkupacks 10 hinein, und die Verriegelung zwischen dem Akkupack 10 und der Handwerkzeugmaschine 210 bzw. dem Adapter 300 wird gelöst, sodass der Akkupack 10 mit der Relativbewegung 27 gelöst werden kann.

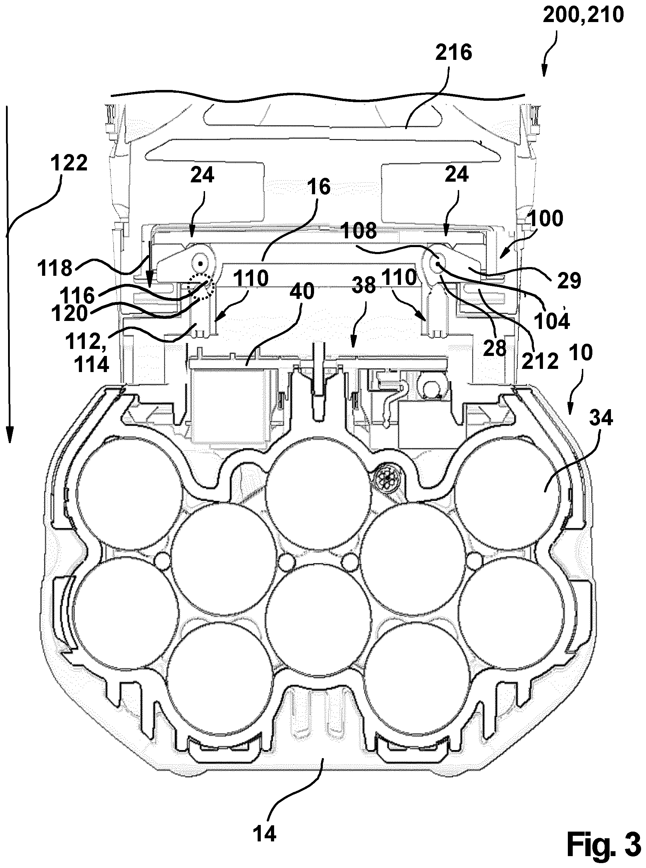

Im Gehäuse 12 des Akkupacks 10 ist zumindest eine Akkuzelle 34 (siehe Fig. 3) aufgenommen, wobei der Akkupack 10 in dieser Ausführungsform beispielhaft zehn parallel oder seriell verschaltete Akkuzellen 34 aufweist. Die Verbindung der Akkuzellen 34 untereinander wird über als Zellverbinder ausgebildete Stromableiter (nicht dargestellt) realisiert. Die Stromableiter sind zur elektrischen Verschaltung der Akkuzellen 34 untereinander in Parallel- und/oder Reihenschaltung ausgebildet. Im Bereich zwischen dem Grundkörper 14 und dem Schnittstellengehäuseteil 16 ist eine Elektronik 38 (siehe Fig. 6) angeordnet. Die Elektronik 38 umfasst eine Leiterplatte 40. Die Elektronik 38 ist mit der Ladezustandsanzeige 22 verbunden. Auf der Leiterplatte 40 sind elektrische Kontaktelemente (nicht dargestellt), die zum Laden und Entladen des Akkupacks 10 vorgesehen sind, und weitere Kontaktelemente (nicht dargestellt), die zur Übermittlung von Zustandsinformationen, wie beispielsweise dem Ladezustand oder die Temperatur des Akkupacks 10, an die Handwerkzeugmaschine 210 ausgebildet sind, angeordnet. Die elektrischen Kontaktelemente und die weiteren Kontaktelemente sind der elektrischen Schnittstelle 26 zugeordnet. Die elektrischen Kontaktelemente sind mit der Elektronik 38 und mit den Akkuzellen 34 verbunden.

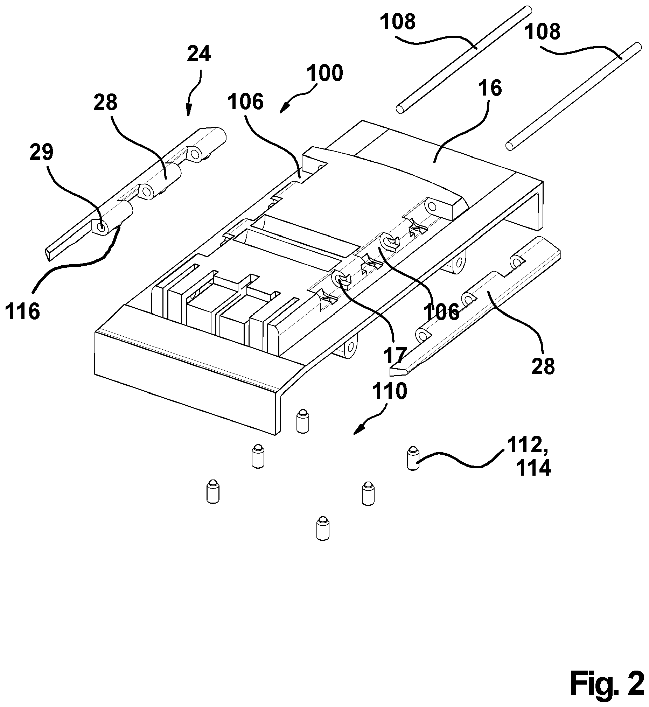

In Fig. 2 ist in einer Explosionszeichnung das Schnittstellengehäuseteil 16 und die mit dem Schnittstellengehäuseteil 16 verbindbare Akkupackschnittstellenvorrichtung 100 gezeigt. Das Sicherungselement 28 der Verbindungseinheit 24 ist über ein Drehgelenk 102 schwenkbar um eine Schwenkachse 104 (siehe Fig. 3) gelagert. Das Sicherungselement 28 ist als eine Führungsschiene ausgebildet, die sich insbesondere entlang der Relativbewegung 25, 27 erstreckt. Die Schwenkachse 104 verläuft entlang der Relativbewegung 25, 27 bzw. entlang der Längserstreckung der Führungsschiene. Das Sicherungselement 28 ist teilweise in einer Ausnehmung 106 des Schnittstellengehäuseteils 16 angeordnet. Das Schnittstellengehäuseteil 16 und das Sicherungselement 28 weisen jeweils eine Querbohrung 17, 29 auf, in die eine stangenförmiges Verbindungselement 108 eingreift. Über das Verbindungselement 108 wird das Sicherungselement 28 mit dem Schnittstellengehäuseteil 16 schwenkbar verbunden. Des Weiteren weist die Akkupackschnittstellenvorrichtung 100 eine Sicherungseinheit 110 auf, die mehrere als Rastkugeln 112 ausgebildete Rückstellelemente 114 aufweist. Die Rückstellelemente 114 sind innerhalb des Gehäuses 12 des Akkupacks 10 angeordnet. Die Rückstellelemente 114 sind translatorisch beweglich im Gehäuse 12 des Akkupacks 10 gelagert.

In Fig. 3 ist ein Querschnitt durch den Akkupack 10 im verbundenen Zustand mit der Handwerkzeugmaschine 210 gezeigt. Im verbundenen Zustand ist der Akkupack 10 vollständig entlang der Relativbewegung 25 eingeschoben. In Fig. 3 ist die Sicherungseinheit 110 im nicht ausgelösten Zustand gezeigt. Im verbunden Zustand ist der Akkupack 10 über das Verriegelungselement 30 an der Handwerkzeugmaschine 210 fixiert. Im verbundenen Zustand ist der Akkupack 10 elektrisch mit der Handwerkzeugmaschine 210 verbunden. Im Querschnitt weist das Sicherungselement 28 einen nockenförmigen Bereich 29 auf. Das Sicherungselement 28 weist zudem einen Anschlag 116 auf, an dem das Rückstellelement 114 im verbundenen Zustand anliegt. Des Weiteren liegt das Sicherungselement 28, insbesondere der nockenförmige Bereich 29 des Sicherungselements 28, bei einer nicht ausgelösten Sicherungseinheit 110 im verbundenen Zustand an einem eine Führungsnut bildenden Gehäuseteil 212 der Handwerkzeugmaschine 210 an. Das Gehäuseteil 212 ist als eine Führungsrippe ausgebildet. Das Sicherungselement 28 ist zumindest bereichsweise im Wesentlichen spielfrei in der Führungsnut aufgenommen.

Die Schwenkbewegung des Sicherungselements 28 wird in eine Richtung durch das Gehäuseteil 212 der Handwerkzeugmaschine 210 und in die andere Richtung durch das am Anschlag 116 anliegende Rückstellelement 114 begrenzt. In der durch das Gehäuseteil 212 begrenzten Richtung ist die Schwenkbewegung des Sicherungselements 28 in Richtung des Akkupacks 10 begrenzt. In der durch das am Anschlag 116 anliegende Rückstellelement 114 begrenzten Richtung ist die Schwenkbewegung des Sicherungselements 28 in Richtung der Handwerkzeugmaschine 210 begrenzt.

Um den Akkupack 10 von dem verbundenen Zustand in einen gelösten Zustand bei einer nicht ausgelösten Sicherungseinheit 110 zu überführen, muss zunächst die Fixierung durch das Verriegelungselement 30 gelöst und in einem weiteren Schritt der Akkupack 10 über die Relativbewegung 27 herausgeschoben werden. Da sich die Fixierung über das Verriegelungselement 30 in der Regel nur durch eine gezielte Betätigung durch den Benutzer lösen lässt, wirken im Falle eines Sturzes des mit der Handwerkzeugmaschine 210 verbundenen Akkupacks 10 im Bereich der mechanischen Verbindung sehr hohe Kräfte, die zu einer Beschädigung des Gehäuses 12 des Akkupacks 10 und/oder des Gehäuseteils 212 der Handwerkzeugmaschine im Bereich der mechanischen Verbindung führen kann. Die Sicherungseinheit 110 ist vorteilhaft derart ausgebildet, dass sie bei hoher Krafteinwirkung auf das Gehäuse 12 des Akkupacks 10 und/oder des Gehäuseteils 212 der Handwerkzeugmaschine 210 insbesondere automatisch betätigt wird. Im Falle eines Sturzes kommt es zu einer hohen Kraftwirkung 118 durch die Masseträgheit des Akkupacks 10, die ausgehend von dem nockenförmigen Bereich 29 des Sicherungselements 28 auf das Gehäuseteil 212 der Handwerkzeugmaschine 210 wirkt. Ist die Kraft 118 größer als eine Reibkraft 120, die zwischen dem Rückstellelement 114 und dem Anschlag 116 wirkt, so wird die Sicherungseinheit 110 ausgelöst, indem das Rückstellelement 114 verschoben, insbesondere einwärts verschoben, wird. Im ausgelösten Zustand der Sicherungseinheit 110 bewegt sich das Sicherungselement 28 in Richtung der Handwerkzeugmaschine 210. Insbesondere bewegt sich das Sicherungselement 28 aus der Führungsnut heraus. Durch das Lösen des Sicherungselements 28 aus der Führungsnut kann die Verbindung des Akkupacks 10 mit der Handwerkzeugmaschine 210 durch eine andere Relativbewegung 122 gelöst werden, die insbesondere im Wesentlichen senkrecht zu der Relativbewegung 27 erfolgt. Die andere Relativbewegung 122 weist eine einzelne translatorische Bewegungsfreiheit, die sich entlang der Wirkrichtung des Rückstellelements 114 erstreckt, auf.

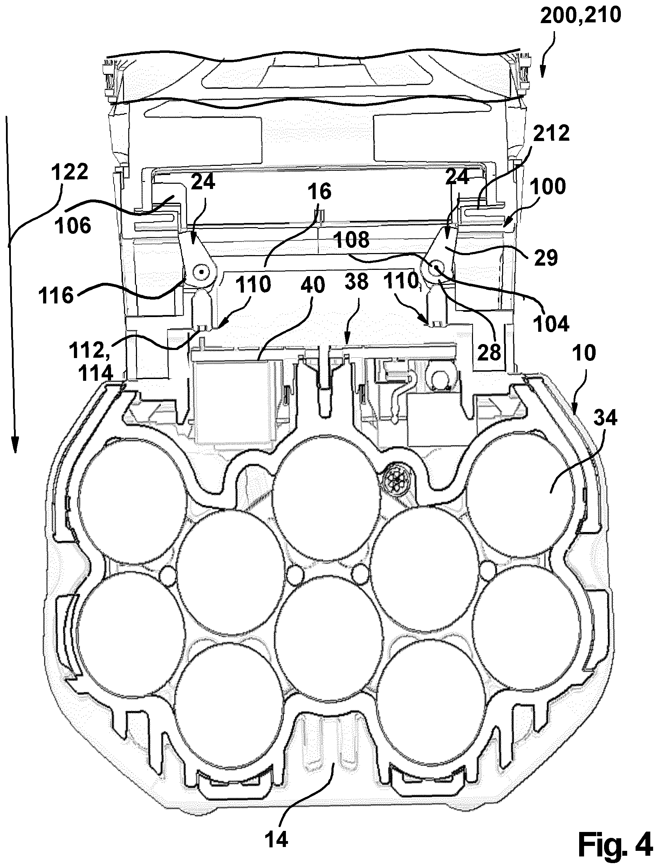

In Fig. 4 ist ein Querschnitt durch den Akkupack 10 im nicht verbundenen Zustand mit der Handwerkzeugmaschine 210 gezeigt, wobei sich die Sicherungseinheit 110 in einem ausgelösten Zustand befindet. Vorteilhaft kann die Außenkontur des Sicherungselements 28 derart geformt sein, dass im gelösten Zustand das Sicherungselement 28 automatisch in den nicht ausgelösten Zustand einrastet, damit der Akkupack 10 wieder über die Relativbewegung 25 mit der Handwerkzeugmaschine 210 verbunden werden kann.

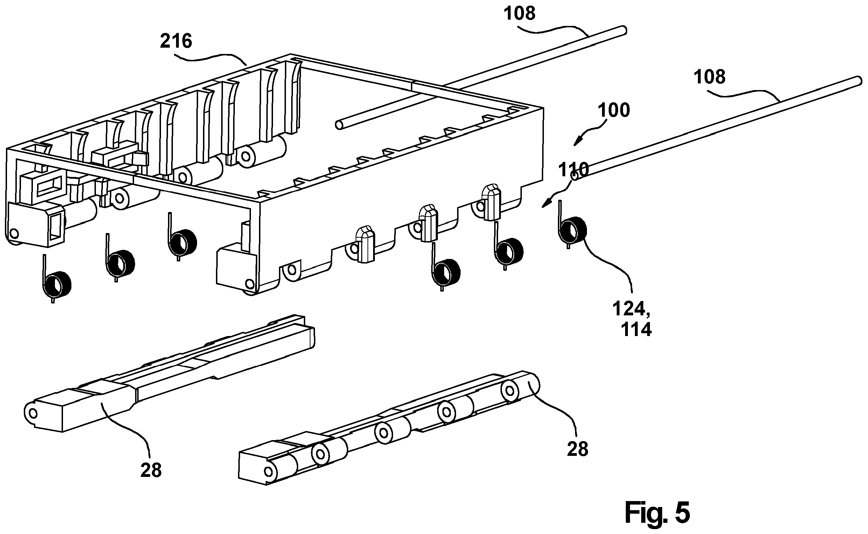

In Fig. 5 ist eine alternative Ausführungsform der Akkupackschnittstellenvorrichtung 100 in einer Explosionszeichnung dargestellt. Zum einen unterscheidet sich in dieser Ausführungsform die Anordnung der Akkupackschnittstellenvorrichtung 100. Die Akkupackschnittstellenvorrichtung 100 ist an einem Fuß 216 der Handwerkzeugmaschine 210 angeordnet und mit einer nicht gezeigten korrespondierenden Schnittstelle es Akkupacks 10 verbindbar. Das Sicherungselement 28 ist, wie bereits zuvor beschrieben, als Führungsschiene ausgebildet und über ein Verbindungselement 108 mit dem Fuß der Handwerkzeugmaschine 210 verbunden. Als weitere Unterscheidung ist das Rückstellelement 114 in diesem Ausführungsbeispiels als eine Schenkelfeder 124 ausgebildet, die derart angeordnet ist, dass das Sicherungselement 28 mit einer Kraft in Richtung des unbetätigten Zustands beaufschlagt wird. Der Lösevorgang über die Sicherungseinheit 110 verläuft in diesem Ausführungsbeispiel im Wesentlichen analog zu dem vorherigen Ausführungsbeispiel.

In Fig. 6 ist beispielhaft ein Akkupack 10, der über einen Adapter 300 mit der Handwerkzeugmaschine 210 verbunden ist, gezeigt. Die Handwerkzeugmaschine 210 ist beispielhaft als ein Akku-Bohrhammer ausgebildet. Die erfindungsgemäße Akkupackschnittstelle 100 kann an dem Akkupack 10, an dem Adapter 300 und/oder an der Handwerkzeugmaschine 210 angeordnet sein, wobei die Verbindungseinheit 24 der Akkupackschnittstellenvorrichtung 100 mit einer korrespondierenden mechanischen Schnittstelle 126 oder mit einer weiteren Verbindungseinheit 24 der Akkupackschnittstellenvorrichtung 100 verbunden ist.

## Patentansprüche

1. Akkupackschnittstellenvorrichtung mit zumindest einer Verbindungseinheit (24), die zur lösbaren mechanischen Verbindung eines Akkupacks (10) mit einem Verbraucher (210) ausgebildet ist, wobei die mechanische Verbindung über eine Relativbewegung (27) des Akkupacks (10) zu dem Verbraucher (200) lösbar ist,
**dadurch gekennzeichnet, dass**
die Akkupackschnittstellenvorrichtung (100) eine Sicherungseinheit (110) aufweist, die derart ausgebildet ist, dass in einem nicht ausgelösten Zustand der Sicherungseinheit (110) die mechanische Verbindung über die Relativbewegung (27) des Akkupacks (10) zu dem Verbraucher (200) lösbar ist und in einem ausgelösten Zustand der Sicherungseinheit (110) die mechanische Verbindung über eine andere Relativbewegung (122) lösbar ist, die sich von der Relativbewegung (27) unterscheidet.

2. Akkupackschnittstellenvorrichtung nach Anspruch 1, **dadurch gekennzeichnet, dass** die Relativbewegung (27) translatorisch und/oder rotarisch ausgebildet ist.

3. Akkupackschnittstellenvorrichtung nach einem der vorhergehenden Ansprüche,
**dadurch gekennzeichnet, dass** die Relativbewegung (27) eine einzelne Bewegungsfreiheit aufweist.

4. Akkupackschnittstellenvorrichtung nach einem der vorhergehenden Ansprüche,
**dadurch gekennzeichnet, dass** die andere Relativbewegung (122) translatorisch und/oder rotatorisch ausgebildet ist.

5. Akkupackschnittstellenvorrichtung nach einem der vorhergehenden Ansprüche,
**dadurch gekennzeichnet, dass** die Verbindungseinheit (24) ein beweglich gelagertes Sicherungselement (28) aufweist.

6. Akkupackschnittstellenvorrichtung nach einem der vorhergehenden Ansprüche,
**dadurch gekennzeichnet, dass** das Sicherungselement (28) schwenkbar um eine Schwenkachse (104) gelagert ist, die sich insbesondere entlang der Relativbewegung (27) erstreckt.

7. Akkupackschnittstellenvorrichtung nach einem der vorhergehenden Ansprüche, **dadurch gekennzeichnet, dass** die Sicherungseinheit (110) ein Rückstellelement (114) aufweist, welches das Sicherungselement (28) mit einer Kraft beaufschlagt.

8. Akkupackschnittstellenvorrichtung nach einem der vorhergehenden Ansprüche, **dadurch gekennzeichnet, dass** das Rückstellelement (114) das Sicherungselement (28) derart mit einer Kraft beaufschlagt, dass das Sicherungselement (28) in einem nicht ausgelösten Zustand verbleibt.

9. Akkupackschnittstellenvorrichtung nach einem der vorhergehenden Ansprüche, **dadurch gekennzeichnet, dass** Sicherungselement (28) als eine Führungsschiene ausgebildet ist.

10. Akkupackschnittstellenvorrichtung mit zumindest einer Verbindungseinheit (24), **dadurch gekennzeichnet, dass** die Verbindungseinheit (24) ein beweglich gelagertes Sicherungselement (28) aufweist, das als eine Führungsschiene ausgebildet ist.

11. Akkupackschnittstellenvorrichtung nach einem der vorhergehenden Ansprüche, **dadurch gekennzeichnet, dass** das Rückstellelement (114) als eine Rastkugel (112) oder als eine Schenkelfeder (124) ausgebildet ist.

12. Akkupack, insbesondere Handwerkzeugmaschinenakkupack, mit zumindest einer Akkupackschnittstellenvorrichtung (100) nach einem der vorhergehenden Ansprüche.

13. Handwerkzeugmaschine mit zumindest einer Akkupackschnittstellenvorrichtung (100) n nach einem der Ansprüche 1 bis 10, wobei der Adapter (300) zwischen dem Akkupack (10) und der Handwerkzeugmaschine (210) angeordnet ist.

## Claims

1. Rechargeable battery pack interface apparatus comprising at least one connecting unit (24) which is designed for releasably mechanically connecting a rechargeable battery pack (10) to a consumer (210), wherein the mechanical connection is releasable by means of a relative movement (27) of the rechargeable battery pack (10) with respect to the consumer (200), **characterized in that**
the rechargeable battery pack interface apparatus (100) has a safety unit (110) which is designed in such a way that the mechanical connection can be released by means of the relative movement (27) of the rechargeable battery pack (10) with respect to the consumer (200) in a non-tripped state of the safety unit (110) and the mechanical connection can be released by means of another relative movement (122), which differs from the relative movement (27), in a tripped state of the safety unit (110).

2. Rechargeable battery pack interface apparatus according to Claim 1, **characterized in that** the relative movement (27) is translational and/or rotational.

3. Rechargeable battery pack interface apparatus according to either of the preceding claims, **characterized in that** the relative movement (27) has single freedom of movement.

4. Rechargeable battery pack interface apparatus according to one of the preceding claims, **characterized in that** the other relative movement (122) is translational and/or rotational.

5. Rechargeable battery pack interface apparatus according to one of the preceding claims, **characterized in that** the connecting unit (24) has a movably mounted safety element (28).

6. Rechargeable battery pack interface apparatus according to one of the preceding claims, **characterized in that** the safety element (28) is pivotably mounted about a pivot axis (104) which extends, in particular, along the relative movement (27).

7. Rechargeable battery pack interface apparatus according to one of the preceding claims, **characterized in that** the safety unit (110) has a resetting element (114) which applies a force to the safety element (28).

8. Rechargeable battery pack interface apparatus according to one of the preceding claims, **characterized in that** the resetting element (114) applies a force to the safety element (28) in such a way that the safety element (28) remains in a non-tripped state.

9. Rechargeable battery pack interface apparatus according to one of the preceding claims, **characterized in that** the safety element (28) is in the form of a guide rail.

10. Rechargeable battery pack interface apparatus comprising at least one connecting unit (24), **characterized in that** the connecting unit (24) has a movably mounted safety element (28) which is in the form of a guide rail.

11. Rechargeable battery pack interface apparatus according to one of the preceding claims, **characterized in that** the resetting element (114) is in the form of a latching ball (112) or in the form of a leg spring (124).

12. Rechargeable battery pack, in particular handheld power tool rechargeable battery pack, comprising at least one rechargeable battery pack interface apparatus (100) according to one of the preceding claims.

13. Handheld power tool comprising at least one rechargeable battery pack interface apparatus (100) according to one of Claims 1 to 10, wherein the adapter (300) is arranged between the rechargeable battery pack (10) and the handheld power tool (210).

## Revendications

1. Dispositif d'interface de bloc-batterie comprenant au moins une unité de liaison (24), qui est configurée pour la liaison mécanique détachable d'un bloc-batterie (10) avec un consommateur (210), la liaison mécanique étant détachable par un mouvement relatif (27) du bloc-batterie (10) par rapport au consommateur (200), **caractérisé en ce que**
le dispositif d'interface de bloc-batterie (100) présente une unité de sécurité (110), qui est configurée de telle sorte que, dans un état non déclenché de l'unité de sécurité (110), la liaison mécanique est détachable par le mouvement relatif (27) du bloc-batterie (10) par rapport au consommateur (200) et, dans un état déclenché de l'unité de sécurité (110), la liaison mécanique est détachable par un autre mouvement relatif (122), qui diffère du mouvement relatif (27).

2. Dispositif d'interface de bloc-batterie selon la revendication 1, **caractérisé en ce que** le mouvement relatif (27) est configuré à translation et/ou à rotation.

3. Dispositif d'interface de bloc-batterie selon l'une quelconque des revendications précédentes, **caractérisé en ce que** le mouvement relatif (27) présente une liberté de mouvement unique.

4. Dispositif d'interface de bloc-batterie selon l'une quelconque des revendications précédentes, **caractérisé en ce que** l'autre mouvement relatif (122) est configuré à translation et/ou à rotation.

5. Dispositif d'interface de bloc-batterie selon l'une quelconque des revendications précédentes, **caractérisé en ce que** l'unité de liaison (24) présente un élément de sécurité (28) monté de manière mobile.

6. Dispositif d'interface de bloc-batterie selon l'une quelconque des revendications précédentes, **caractérisé en ce que** l'élément de sécurité (28) est monté de manière pivotante autour d'un axe de pivotement (104), qui s'étend notamment le long du mouvement relatif (27).

7. Dispositif d'interface de bloc-batterie selon l'une quelconque des revendications précédentes, **caractérisé en ce que** l'unité de sécurité (110) présente un élément de rappel (114), qui sollicite l'élément de sécurité (28) avec une force.

8. Dispositif d'interface de bloc-batterie selon l'une quelconque des revendications précédentes, **caractérisé en ce que** l'élément de rappel (114) sollicite l'élément de sécurité (28) avec une force, de telle sorte que l'élément de sécurité (28) reste dans un état non déclenché.

9. Dispositif d'interface de bloc-batterie selon l'une quelconque des revendications précédentes, **caractérisé en ce que** l'élément de sécurité (28) est configuré sous la forme d'un rail de guidage.

10. Dispositif d'interface de bloc-batterie comprenant au moins une unité de liaison (24), **caractérisé en ce que** l'unité de liaison (24) présente un élément de sécurité (28) monté de manière mobile, qui est configuré sous la forme d'un rail de guidage.

11. Dispositif d'interface de bloc-batterie selon l'une quelconque des revendications précédentes, **caractérisé en ce que** l'élément de rappel (114) est configuré sous la forme d'une bille d'arrêt (112) ou sous la forme d'un ressort à branches (124).

12. Bloc-batterie, notamment bloc-batterie pour machine-outil à main, comprenant au moins un dispositif d'interface de bloc-batterie (100) selon l'une quelconque des revendications précédentes.

13. Machine-outil à main comprenant au moins un dispositif d'interface de bloc-batterie (100) selon l'une quelconque des revendications 1 à 10, dans laquelle l'adaptateur (300) est agencé entre le bloc-batterie (10) et la machine-outil à main (210).
